# EUROPÄISCHE PATENTANMELDUNG

(11) **EP 0 811 798 A2**
(43) Veröffentlichungstag der Anmeldung: **10.12.1997**
(21) Anmeldenummer: 96117573.4
(22) Anmeldetag: 02.11.1996
(51) Int. Cl.: F16L 37/088

(54) **Steck-Kupplung**

(30) Priorität: 07.06.1996 DE 29610026 U
(71) Anmelder: Cohnen Beteiligungs-GmbH & Co. KG, D-35683 Dillenburg (DE)
(72) Erfinder: Heidemann, Jens, 57299 Burbach (DE)
(74) Vertreter: Missling, Arne, Dipl.-Ing.

(57) **Zusammenfassung**

Bei Steck-Kupplungen für die Kupplung von Schläuchen, Rohrleitungen oder dergleichen muß dafür gesorgt werden, daß die verwendete Dichtung möglichst nur die anliegende Dichtkraft aufnehmen muß, um eine hohe Lebensdauer zu sichern; das trifft auch zu, wenn ein Teil der Steck-Kupplung als spanlos umgeformtes Bauteil ausgebildet ist. Erfindungsgemäß sind an einer solchen Steck-Kupplung Führungsbereiche vorgesehen, zwischen denen die Dichtung angeordnet und gegen Formänderung geschützt ist; dazu ist die Dichtung weiterhin dreigeteilt aus einem Dichtungselement und zwei lagestabilisierenden Führungselementen zusammengesetzt.

## Beschreibung

Die Erfindung betrifft eine Steck-Kupplung für ein in ein Mundstück auslaufendes Rohr an einem mit einer Durchgangsbohrung versehenen Anschlußstück für eine Rohr- oder Schlauchleitung, wobei das Mundstück in eine zentrale, durch eine Senkung der Durchgangsbohrung gebildete Aufnahmebohrung des Anschlußstückes einführbar und mittels eines Klemmstückes arretierbar ist, wobei ferner eine Dichtung zwischen dem Mundstück und der Aufnahmebohrung angeordnet ist und wobei das Mundstück einschließlich der daran ausgebildeten Funktionselemente durch Verformung des Rohres gebildet wird.

Eine Steck-Kupplung dieser Art ist bereits aus der Offenlegungsschrift DE 38 37 492 A1 bekannt. Als Klemmstück dient hierbei eine Spannhülse, welche das Rohr mit einer an diesem angestauchten Ringwulst an das Anschlußstück anlegt; die das Anschlußstück übergreifende Spannhülse wird dann in dieser gekuppelten Stellung durch ein Federelement axial arretiert, das in Nuten der Spannhülse und des Anschlußstückes einrastet. Bei dieser Ausführung besteht nach längerem Gebrauch die Gefahr, daß die dabei verwendete Dichtung in ihrer Dichtwirkung nachläßt, weil nur eine relativ kurze Führung für das Mundstück vorhanden ist, so daß die Dichtung, insbesondere bei häufigem Gebrauch der Steck-Kupplung, auch Biegekräften ausgesetzt wird.

In der Gebrauchsmusterschrift DE 90 02 341 U1 ist eine Steck-Kupplung beschrieben, bei der ein Rohrstutzen mit einer Schlauchtülle verbunden ist und mindestens zwei Führungsbereiche für die mittels eines Schlauchbandes an einem Schlauch befestigte Schlauchtülle in dem Rohrstutzen vorgesehen sind, zwischen denen sich eine Dichtung befindet. Für die Dichtung ist hierbei eine spezielle axiale Einspannung vorgesehen, die andererseits zugleich die Steck-Kupplung mittels eines Klemmstückes axial fixiert. Eine solche Anordnung erfordert die Anfertigung sehr genauer, durch spanende Formgebung herzustellende Bauteile, wie sie für eine Massenfertigung ungeeignet ist. Die Dichtung ist hierbei durch die sowohl axial als auch radial wirksame Vorspannung hoch belastet, eine anhaltende Dichtwirkung ist deshalb nicht zu erwarten.

Die Erfindung hat sich deshalb die Aufgabe gestellt, eine eingangs naher bezeichnete Steck-Kupplung so auszuführen, daß ihre Lebensdauer verbessert wird unter Beibehaltung einer einfachen, ohne Zerspanung auskommenden und für eine Massenfertigung geeigneten Herstellung von wenigen Einzelteilen.

Erfindungsgemäß wird die Aufgabe dadurch gelöst, daß sowohl das Mundstück als auch die Aufnahmebohrung zwei axial voneinander beabstandete Führungsbereiche jeweils unterschiedlichen Durchmessers aufweisen, wobei jeder der Führungsbereiche von Teilstücken jeweils etwa gleichen Durchmessers des Mundstückes und der Aufnahmebohrung gebildet wird, die einander zugeordnet sind, wenn die Steck-Kupplung hergestellt ist, und daß die das Mundstück umgebende Dichtung zwischen den beiden Führungsbereichen angeordnet ist. Das Mundstück ist dabei zweckmäßig derart ausgebildet, daß die dem freien Ende des Mundstückes abgewandte Seite in ein koaxiales Zentrierstück größeren Durchmessers übergeht. Die Herstellung der Steck-Kupplung wird dabei erleichtert, wenn an dem freien Ende des Mundstückes und/oder an dem Zentrierstück als Einführungshilfen in das Anschlußstück dienende Fasen, Kegel oder dergleichen Übergänge ausgebildet sind; beispielsweise kann das Zentrierstück mit einer als Einführungshilfe dienenden kegeligen Einziehung mit dem Mundstück verbunden sein.

Die Dichtung ist dementsprechend axial relativ frei beweglich, so daß paßgenaue, aufwendige Arretierungen nicht erforderlich sind. Das ist auch deshalb besonders vorteilhaft, weil das Mundstück voraussetzungsgemäß nicht spangebend hergestellt werden soll, sondern alle für die Herstellung der Kupplung erforderlichen Bau- und Funktionselemente durch (spanlose) Verformung durch Drücken und Stauchen an dem Rohrende ausgebildet werden sollen. Hohe Paßgenauigkeit ist dabei nicht ohne weiteres erreichbar; dem kommt der Verzicht auf eine axiale Fixierung der Dichtung entgegen.

In einer besonders bevorzugten Ausführung der erfindungsgemäßen Steck-Kupplung dient das Zentrierstück als Anschlag für eine als Klemmstück dienende Drahtfeder zur axialen Sicherung der Steck-Kupplung, so daß das Zentrierstück mehrfach genutzt wird.

Die Aufnahmebohrung kann einen an die koaxiale Durchgangsbohrung mit einem Anschlagbund für das freie Ende des Mundstückes anschließenden ebenfalls koaxialen Steckylinder für das Mundstück aufweisen,, der andererseits in eine Zentrierbohrung vergrößerten Durchmessers für das Zentrierstück übergeht. In dieser einfachen Weise entstehen in Verbindung mit dem Mundstück die beiden Führungsbereiche, welche sicherstellen, daß auf die zwischen ihnen befindliche Dichtung auch nach langer Betriebsdauer keine Biegekräfte einwirken und die Dichtwirkung mindern.

Im einzelnen ist es besonders vorteilhaft, wenn die Dichtung als Ringdichtung ausgebildet und radial zwischen dem Mundstück und einem das Mundstück überfangenden Teilstück der Zentrierbohrung sowie axial zwischen dem Grund der Zentrierbohrung und dem Zentrierstück angeordnet ist. Sie kann dabei aus mindestens zwei Führungselementen und mindestens einem zwischen den Führungselementen befindlichen, von diesen axial beabstandeten, ringförmigen Dichtungselement besteht; am besten ist es, wenn die Führungselemente und das Dichtungselement durch ein zylindrisches, auf dem Mundstück aufliegendes Tragstück einstückig miteinander verbunden sind. Eine solche Ausbildung sorgt dafür, daß die Funktionen der Abdichtung und der Lagesicherung der Dichtung voneinander getrennt sind.

Es ist zweckmäßig, wenn das Mundstück, das Zentrierstück, die Einziehung und ein Klemmzylinder für die Drahtfeder durch Stauchungen und Einziehungen des Rohres ausgebildet sind, so daß tatsächlich alle erforderlichen Konturen durch Umformen des Rohres gewonnen werden.

Der Klemmzylinder kann zweckmäßig an der der Einziehung gegenüberliegenden Seite des Zentrierstückes angebracht sein; an dem Anschlußstück ist dann ein Querschlitz für die Drahtfeder so vorgesehen, daß diese auf dem Klemmzylinder aufliegt und an das Zentrierstück anschlägt, wenn die Steck-Kupplung hergestellt ist.

Das Mundstück ist vorteilhaft mit dem Anschlußstück nach dem Kuppeln drehfest verbunden, insbesondere durch mindestens eine zu der Längsachse der Steck-Kupplung parallele Haltenut für eine komplementäre Halteleiste in dem Steckgehäuse des Anschlußstückes.

Das Anschlußstück kann als Kunststoff- oder Metallspritzgußteil ausgeführt werden, so daß auch hier eine präzise und zugleich billige Herstellung in großen Stückzahlen gewährleistet werden kann.

Insgesamt stellt die erfindungsgemäße Steck-Kupplung eine einfach und preiswert herstellbare Baugruppe dar, die durch die langzeit-gesicherte Form- und Lagestabilität ihrer Dichtung als des enpfindlichsten Bauteiles eine hohe Betriebsdauer gewinnt.

Die Erfindung wird nachstehend anhand der Zeichnung an einem Ausführungsbeispiel näher erläutert. Es zeigen
- Fig.1: eine erfindungsgemäße Steck-Kupplung in räumlicher Sprengdarstellung,
- Fig.2: eine Ansicht sowie (Fig.2a) einen Schnitt und
- Fig.3: einen vergrößerten Längsschnitt der Steck-Kupplung und
- Fig.4: eine Dichtung für die Steckkupplung, teilweise geschnitten,
sämtlich in schematischer, vereinfachter Darstellung

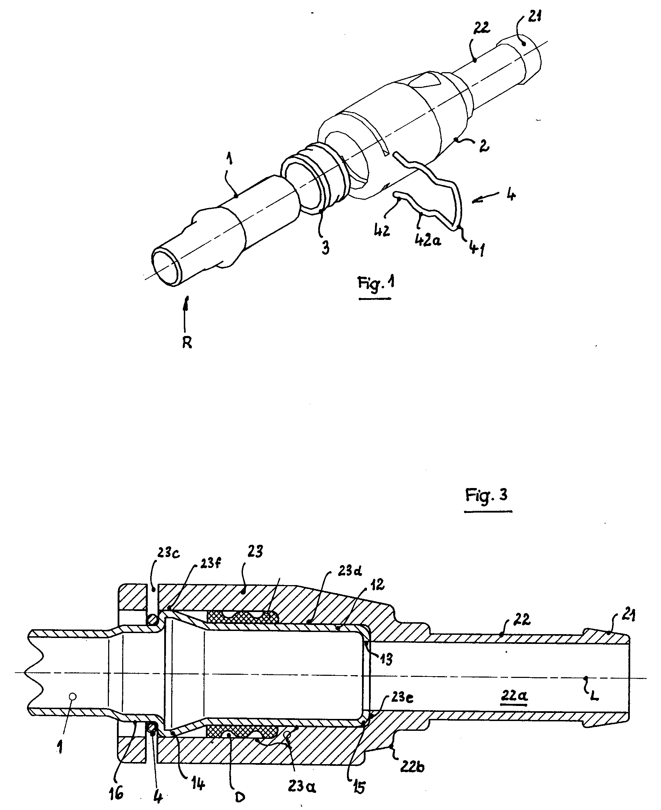

Eine Steck-Kupplung nach der Erfindung besteht zunächst entsprechend der Fig.1 aus einem an einem Rohr R ausgebildeten Mundstück 1, einem Anschlußstück 2 (insbesondere für einen in der Zeichnung weggelassenen Schlauch), einer Dichtung 3 und einem Klemmstück 4.

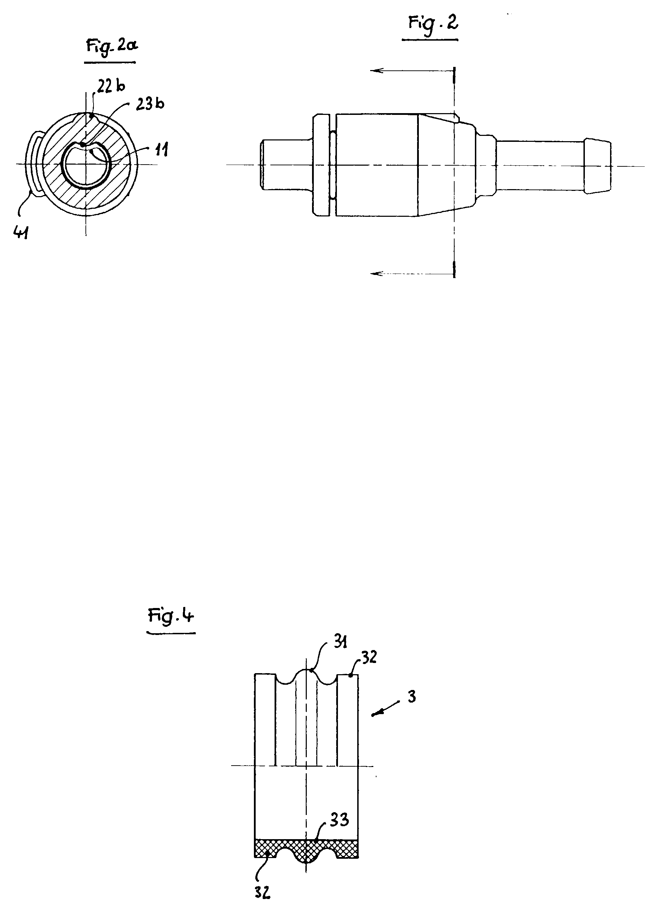

Das Rohr R kann mit einem anderen, ortsfesten Bauteil verbunden oder genauso wie das Anschlußstück 2 an einen Schlauch oder dergleichen biegsames Element angeschlossen sein. An dem Anschlußstück 2 ist ein Einführkegel 21 an einem Rohrstück 22 vorgesehen, so daß ein Schlauch mittels eines Schlauchbandes in der üblichen Weise an dem Anschlußstück 2 befestigbar ist. Eine entsprechend Fig.3 in dem Rohrstück 22 befindliche Durchgangsbohrung 22a geht etwa in der Mitte des Anschlußstückes 2 über in eine Aufnahmebohrung 23a innerhalb eines Steckgehäuses 23 für das Mundstück 1. Eine Montagehilfe 22b sorgt dafür, daß das Anschlußstück 2 beim Kuppeln sichtbar um die Längsachse L verdreht werden kann, um beim Einkuppeln mit mindestens einer in der Aufnahmebohrung 23a, angeformten, der Durchgangsbohrung 22a benachbarten Halteleiste 23b (Fig.2a) in eine an dem Mundstück 1 eingeprägte Haltenut 11 zu gelangen, so daß das Mundstück 1 und das Anschlußstück 2 drehfest miteinander verbunden sind.

In den Fig.1,3 ist außerdem eine schlitzförmige Ausnehmung 23c zu erkennen, in die, quer zu der Längsachse L der Steck-Kupplung, das Klemmstück 4 eingeführt werden kann, mit dessen Hilfe die hergestellte Kupplung verrastet wird und das hier als Drahtfeder ausgebildet ist.

In der Fig.3 ist leicht zu erkennen, daß die Dichtung 3 zwischen zwei Führungsbereichen 12,23d und 14,23f angeordnet ist, die beim Kuppeln der Steck-Kupplung hergestellt werden.

Ein erster Führungsbereich 12,23d wird dabei von einem Steckzylinder 23d und einem Steckstück 12 gebildet; beide Teile 12,23d sind - bis auf die Haltenut 11 und die Halteleiste 23b - kreiszylindrisch ausgebildet, wobei das Steckstück 12 einen mit einer Mündung 13 abschließenden Teil des Mundstückes 1 und der Steckzylinder 23d einen Teil der Aufnahmebohrung 23a bildet, der an einen Anschlagbund 23e für die Mündung 13 grenzt. Der Führungsbereich 12,23d ist am besten als (grobe Spiel-) Passung ausgelegt.

Ein zweiter Führungsbereich 14,23f besteht aus einem kurzen Stück einer Zentrierbohrung 23f (ebenfalls ein Teil der Aufnahmebohrung 23a), an den Steckzylinder 23d anschließend und diesem gegenüber durchmesser-vergrößert, sowie aus einem Zentrierstück 14 in Form einer an dem Mundstück 1 kegelstumpfförmig angestauchten Aufweitung. Der Führungsbereich 14,23f bildet eine ähnliche Fassung wie der erste Führungsbereich 12,23d.

Der mit dem Zentrierstück 14 verbundene, angestauchte Kegel ist so orientiert, daß er als Einführungshilfe in die Zentrierbohrung 23f dient, um das Kuppeln der Steck-Kupplung zu erleichtern. Dem gleichen Zweck dient eine weitere, als Rundung 15 zwischen dem Steckstück 12 und der Mündung 13 ausgebildete Einführungshilfe, welche die Herstellung des ersten Führungsbereiches 12,23d erleichtert.

Die beiden Führungsbereiche 12,23d und 14,23f bilden eine lagestabile Zuordnung der beiden Kupplungshälften aus, so daß die Dichtung 3 allein durch die anliegende Dichtungskraft belastet wird: eine hohe Lebensdauer der Dichtung 3 ist nun bereits dadurch gesichert, daß sie zwischen diesen Führungsbereichen 12,23d und 14,23f vorgesehen ist. Zu diesem Zweck ist die Zentrierbohrung 23f viel länger ausgeführt, als es für die Führung des Zentrierstückes 14 erforderlich wäre, so daß ein Dichtungsraum D zur Aufnahme der Dichtung 3 gebildet wird, wenn die Steck-Kupplung hergestellt ist.

Die Dichtung 3 (Fig.4) ist als Ringdichtung ausgebildet und besteht aus einem kreisringförmigen Dichtungselement 31 und zwei diesem auf beiden Seiten benachbarten, ebenfalls kreis-ringförmigen Führungselementen 32, die sämtlich auf einem gemeinsamen, kreiszylindrischen Tragstück 33 angeordnet sind, am besten untereinander und mit diesem einstückig, wie es in der Zeichnung dargestellt ist. Das Dichtungselement 31 erfüllt allein die Dichtfunktion, für die es vorgesehen ist. Hingegen dienen die Führungselemente 32 (ausschließlich) zur Lagestabilisierung der Dichtung 3; ihre an der Zentrierbohrung 23f anliegende Außenkontur ist deshalb mit einem kleineren Durchmesser ausgeführt als die entsprechende Außenkontur des Dichtungselementes 31 (Fig.4) und auch anders profiliert. Das Tragstück 33 der Dichtung 3 ist mit Vorspannung auf dem Steckstück 12 außerhalb dessen zu dem Führungsbereich 12,23d gehörigen Teilstückes angeordnet.

Die Anordnung ist so getroffen, daß bei hergestellter Kupplung nach Einführung des Mundstückes 1 und Ausbildung der beiden Führungsbereiche 12,23d und 14,23f das Zentrierstück 14 mit seiner der Einziehung entgegengesetzten Seite gerade mit der Ausnehmung 23c bzw. deren Begrenzung bündig ist, so daß die Kupplung axial fixiert ist, wenn die Drahtfeder 4 in die Ausnehmung 23c soweit eingeführt ist, daß sie an dem Zentrierstück 14 anliegt. Die Drahtfeder 4 besteht U-förmig aus einem Griffstück 41 und zwei Federschenkeln 42, die in die Ausnehmung 23c soweit einschiebbar sind, daß (Fig.2a) das Griffstück 41 außerhalb verbleibt. Im übrigen liegen dann die Federschenkel 42 mit jeweils einem gebogenen Formstück 42a an einem Klemmzylinder 16 an, der das Rohr R mit dem Zentrierstück 14 bzw. dem Mundstück 1 verbindet, und wie diese an dem Rohr R (spanlos) angeformt ist.

### Aufstellung der Bezugszeichen

- 1: Mundstück
- 11: Haltenut
- 12: Steckstück
- 13: Mündung
- 14: Zentrierstück
- 15: Rundung
- 16: Klemmzylinder
- 2: Anschlußstück
- 21: Einführkegel
- 22: Rohrstück
- 22a: Durchgangsbohrung
- 22b: Montagehilfe
- 23: Steckgehäuse
- 23a: Aufnahmebohrung
- 23b: Halteleiste
- 23c: Ausnehmung
- 23d: Steckzylinder
- 23e: Anschlagbund
- 23f: Zentrierbohrung
- 3: Dichtung
- 31: Dichtungselement
- 32: Führungselement
- 33: Tragstück
- 4: Klemmstück, Drahtfeder
- 41: Griffstück
- 42: Federschenkel
- 42a: Formstück
- 12,23d: (erster) Führungsbereich
- 14,23f: (zweiter) Führungsbereich
- D: Dichtungsraum
- L: Längsachse
- R: Rohr

## Patentansprüche

1. Steck-Kupplung für ein in ein Mundstück (1) auslaufendes Rohr (R) an einem mit einer Durchgangsbohrung (22a) versehenen Anschlußstück (2) für eine Rohr- oder Schlauchleitung, wobei das Mundstück (1) in eine zentrale, durch eine Senkung der Durchgangsbohrung (22a) gebildete Aufnahmebohrung (23a) des Anschlußstückes (2) einführbar und mittels eines Klemmstückes (4) arretierbar ist, wobei ferner eine Dichtung (3) zwischen dem Mundstück (1) und der Aufnahmebohrung (23a) angeordnet ist und wobei das Mundstück (1) einschließlich der daran ausgebildeten Funktionselemente durch Verformung des Rohres (R) gebildet wird,
dadurch gekennzeichnet,
(a) daß sowohl das Mundstück (1) als auch die Aufnahmebohrung (23a) zwei axial voneinander beabstandete Führungsbereiche (12,23d und 14,23f) jeweils unterschiedlichen Durchmessers aufweisen, wobei jeder der Führungsbereiche (12,23d und 14,23f) von Teilstücken (12,14,23d,f) jeweils etwa gleichen Durchmessers des Mundstückes (1) und der Aufnahmebohrung (23a) gebildet wird, die einander zugeordnet sind, wenn die Steck-Kupplung hergestellt ist, und
(b) daß die das Mundstück (1) umgebende Dichtung (3) zwischen den beiden Führungsbereichen (12,23d und 14,23f) angeordnet ist.

2. Steck-Kupplung nach Anspruch 1, dadurch gekennzeichnet, daß das Mundstück (1) derart ausgebildet ist, daß die dem freien Ende des Mundstückes (1) abgewandte Seite in ein koaxiales Zentrierstück (14) größeren Durchmessers übergeht.

3. Steck-Kupplung nach Anspruch 2, dadurch gekennzeichnet, daß an dem freien Ende des Mundstückes (1) und/oder an dem Zentrierstück (14) als Einführungshilfen in das Anschlußstück (2) dienende Fasen, Kegel oder dergleichen Übergänge ausgebildet sind.

4. Steck-Kupplung nach Anspruch 2 oder 3, dadurch gekennzeichnet, daß das Zentrierstück (14) mit einer als Einführungshilfe dienenden kegeligen Einziehung mit dem Mundstück (1) verbunden ist.

5. Steck-Kupplung nach einem der Ansprüche 2 bis 4, dadurch gekennzeichnet, daß das Zentrierstück (14) als Anschlag für eine Drahtfeder (4) zur axialen Sicherung der Steck-Kupplung dient.

6. Steck-Kupplung nach Anspruch 1 oder 2, dadurch gekennzeichnet, daß die Aufnahmebohrung (23a) einen an die koaxiale Durchgangsbohrung (22a) mit einem Anschlagbund (23e) für das freie Ende des Mundstückes (1) anschließenden, ebenfalls koaxialen Steckzylinder (23d) für das Mundstück (1) aufweist, der andererseits in eine Zentrierbohrung (23f) vergrößerten Durchmessers für das Zentrierstück (14) übergeht.

7. Steck-Kupplung nach Anspruch 6, dadurch gekennzeichnet, daß die Dichtung (3) als Ringdichtung ausgebildet und radial zwischen dem Mundstück (1) und einem das Mundstück (1) überfangenden Teilstück der Zentrierbohrung (23f) sowie axial zwischen dem Grund der Zentrierbohrung (23f) und dem Zentrierstück (14) angeordnet ist.

8. Steck-Kupplung nach einem der Ansprüche 1 bis 7, dadurch gekennzeichnet, daß die Dichtung (3) aus mindestens zwei Führungselementen (32) und mindestens einem zwischen den Führungselementen (32) befindlichen, von diesen axial beabstandeten, ringförmigen Dichtungselement (31) besteht.

9. Steck-Kupplung nach Anspruch 8, dadurch gekennzeichnet, daß die Führungselemente (32) und das Dichtungselement (31) durch ein zylindrisches, auf dem Mundstück (1) aufliegendes Tragstück (33) einstückig miteinander verbunden sind.

10. Steck-Kupplung nach einem der Ansprüche 1 bis 9, dadurch gekennzeichnet, daß das Mundstück (1), das Zentrierstück (14), die Einziehung und ein Klemmzylinder (16) für die Drahtfeder (4) durch Stauchungen und Einziehungen des Rohres (R) ausgebildet sind.

11. Steck-Kupplung nach einem der Ansprüche 5 bis 10, dadurch gekennzeichnet, daß der Klemmzylinder (16) an der der Einziehung gegenüberliegenden Seite des Zentrierstückes (14) angebracht und an dem Anschlußstück (2) eine Ausnehmung (23c) für die Drahtfeder (4) so vorgesehen ist, daß diese auf dem Klemmzylinder (16) aufliegt und an das Zentrierstück (14) anschlägt.

12. Steck-Kupplung nach einem der Ansprüche 1 bis 11, dadurch gekennzeichnet, daß das Mundstück (1) mit dem Anschlußstück (2) nach dem Kuppeln drehfest verbunden ist, insbesondere durch mindestens eine zu der Längsachse (L) der Steck-Kupplung parallele Haltenut (11) für eine komplementäre Halteleiste (23b) in dem Steckgehäuse (23) des Anschlußstückes (2).
